# EUROPÄISCHE PATENTANMELDUNG

(11) **EP 1 700 924 A1**
(43) Veröffentlichungstag der Anmeldung: **13.09.2006**
(21) Anmeldenummer: 06004548.1
(22) Anmeldetag: 07.03.2006
(51) Int. Cl.: C21D 8/06, C21D 9/52, C21D 8/08, C21D 1/32

(54) **Verfahren und Anlage zum Herstellen von Stahldraht hoher Duktilität aus warmgewalztem Walzdraht**

(30) Priorität: 07.03.2005 AT 3812005
(71) Anmelder: EVG Entwicklungs- u. Verwertungs- Gesellschaft m.b.H., A-8042 Raaba (AT)
(72) Erfinder: Ritter, Klaus, Dipl.-Ing., 8042 Graz (AT)
(74) Vertreter: Holzer, Walter

(57) **Zusammenfassung**

Verfahren und Anlale zum Herstellen von Stahldraht hoher Duktilität aus warmgewalztem Walzdraht, wobei in einem kontinuierlichen Verfahrensablauf der warmgewalzte Walzdraht (W) zuerst kaltverformt (4), sodann auf 300 BIS 500° C erwärmt (8) und wieder abgekühlt (9) sowie anschließend aufgewickelt (10) wird. Die Anlage beinhaltet eine Querschnitts-Reduktionseinrichtung, eine Zieheinrichtung, einen Drahtspeicher, eine Richteinrichtung und eine Einrichtung zum Aufheizen und zum Kühlen des kaltverformten Drahtes, sowie eine Wickeleinrichtung. Der Stahldraht wird mit Hilfe der Wickeleinrichtung kontinuierlich durch die Anlage gezogen.

## Beschreibung

Die Erfindung betrifft ein Verfahren zum Herstellen von Stahldraht hoher Duktilität aus warmgewalztem Walzdraht, sowie eine Anlage zur Durchführung des Verfahrens.

Aus der US-B-4,421,304 ist eine Vorrichtung zum kontrollierten Aufwärmen von länglichem Material bekannt. Die Vorrichtung hat einen Drahtablauf, eine Zieheinrichtung zur Reduktion des Querschnittes, eine Heizeinrichtung nach dem widerstandsheizverfahren, einen. Wärmespeicher, eine Kühlstrecke und eine Wickeleinrichtung. Diese Vorrichtung hat den Nachteil, daß beim Widerstandsheizverfahren die auf den Draht übertragene Heizleistung nur begrenzt ist und daher ein aufwendiger Wärmespeicher notwendig ist.

Aufgabe der Erfindung ist es, den geschilderten Nachteil der bekannten Vorrichtung zu vermeiden und ein Verfahren und eine Anlage der einleitend angegebenen Art zu schaffen, die es ermöglichen, aus warmgewalztem Walzdraht Stahldrähte mit hoher Duktilität herzustellen, odine die Festigkeit der Drähte entscheidend zu verringern. Das erfindungsgemäße Verfahren zeichnet sich dadurch aus, daß in einem kontinuierlichen Verfahrensablauf der warmgewalzte Walzdraht zuerst kaltverformt, sodann erwärmt und wieder abgekühlt sowie anschließend aufgewikkelt wird.

Gegenstand der Erfindung ist auch eine Anlage zur Durchführung des Verfahrens mit einer Entzunderungseinrichtung, einer Ziehmittelauftragseinrichtung, einer Querschnitts-Reduktionseinrichtung, einer Zieheinrichtung und einer Drahtwikkeleinrichtung. Diese Anlage hat erfindungsgemäß die Merkmale, daß der Zieheinrichtung eim Drahtspeicher nachgeschaltet ist, an den eine Einrichtung zum Aufheizen des kaltverformten Stahldrahtes und an diese eine Einrichtung zum Kühlen des erwärmten Stahldrahtes anschließt, wobei der Stahldraht mit Hilfe der Wickeleinrichtung kontinuierlich durch den Drahtspeicher samt Richteinrichtung, durch die Heizeinrichtung und die Kühleinrichtung ziehbar ist.

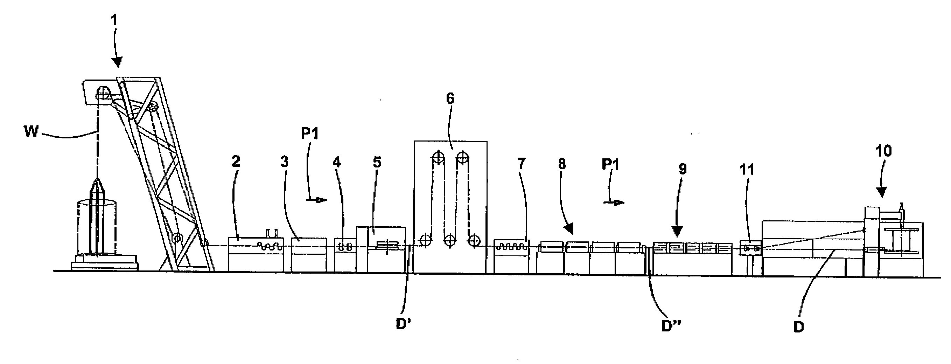

Weitere Merkmale und Vorteile der Erfindung werden nachfolgend an einem Ausführungsbeispiel unter Bezugnahme auf die Zeichnung näher erläutert, die eine schematische Seitenansicht einer Anlage gemäß der Erfindung zeigt.

Die dargestellte Anlage dient zum Herstellen von Stahldraht D mit hoher Duktilität, wobei als Ausgangsmaterial warmgewalzter walzdraht W verwendet wird. Der Stahldraht D hat einen Durchmesserbereich von 3 bis 16 mm und kann im Rahmen der Erfindung eine glatte, gerippte oder geprägte Oberfläche aufweisen. Derartige Drähte werden als Betonstahldrähte für Bewehrungsmatten und andere Bewehrungsprodukte verwendet.

Das Ausführungsbeispiel hat in Produktionsrichtung P1 gesehen eine Walzdrahtablaufeinrichtung 1, eine Entzunderungseinrichtung 2, eine Ziehmittelauftragseinrichtung 3, eine Reduktionseinrichtung 4, sowie eine Zieheinrichtung 5. Die Einrichtungen 1 bis 5 dienen zur Querschnittsreduktion und zur Herstellung eines kaltverformten Stahldrahtes D'. Die Walzdrahtablaufeinrichtung 1 weist beispielsweise einen schwenkbaren Haspeldorn mit anschließendem Schlingenfänger auf. Die Entzunderungseinrichtung 2 ist beispielsweise als Rollenentzunderung aufgebaut, in der der Walzdraht durch entsprechende Biegevorgänge entzundert wird. Die Reduktionseinrichtung 4 besteht beispielsweise aus einer Kaltverformungseinrichtung mit mehreren Reduktionswalzen. Im Rahmen der Erfindung kann die Reduktionseinrichtung 4 auch aus einer Reckeinrichtung bestehen. Die Zieheinrichtung 5 weist im wesentlichen eine angetriebene Ziehscheibe auf.

An die Zieheinrichtung 5 schließt ein Drahtspeicher 6 an, der im wesentlichen aus mehreren vertikal verschiebbaren Rollen besteht und die Aufgabe hat, genügend Speicherstrecke zu Verfügung zu stellen, um im Falle eines Drahtbruches im Bereich der Reduktionseinrichtung 4 ein sicheres Stoppen der Produktionslinie zu gewährleisten und so sicherzustellen, daß die nachgeschalteten Einrichtungen nicht beschädigt werden. Dem Drahtspeicher 6 ist eine Richteinrichtung 7 nachgeschaltet, die den Stahldraht D' gerade richtet. Die Richteinrichtung 7 hat vorzugsweise zwei Richtapparate, die jeweils aus mehreren versetzt zueinander angeordneten Richtrollen bestehen, wobei die Achsen der Richtrollen des einen Richtapparates senkrecht zu den Achsen der Richtrollen des anderen Richtapparates verlaufen.

Der Stahldraht D' wird nach dem Richten einer Heizeinrichtung 8 zugeführt. Die Heizeinrichtung 8 besteht vorzugsweise aus mehreren, beispielsweise aus vier Induktivheizstrecken und heizt den Stahldraht D' auf eine Temperatur von 300 bis 500 °C auf. Die Heizeinrichtung 8 ist außerdem mit Temperaturmeßeinrichtungen ausgestattet, die mit Hilfe einer entsprechenden Regelung die Heizleistung entsprechend der gewünschten Temperatur, dem Durchmesser und der Geschwindigkeit des Stahldrahtes D" anpaßt. Die Durchlaufgeschwindigkeit ist vom Drahtdurchmesser abhängig und liegt im beschriebenen Ausführungsbeispiel im Bereich von 2 bis 10 m/sek. Um den Stahldraht D" aufwickeln zu können, wird er in einer nachgeschalteten Kühleinrichtung 9 auf ungefähr 100 °C abgekühlt. Die Temperatur des abgekühlten Stahldrahtes D hängt vom Wickelverfahren ab und kann im Rahmen der Erfindung im Bereich von 20 bis 150 °C liegen. Die Kühleinrichtung 9 besteht im beschriebenen Ausführungsbeispiel aus einer Wasserkühlung. Im Rahmen der Erfindung kann die Kühleinrichtung 9 auch mit Luft oder Öl betrieben werden. Des weiteren sind alle Kombinationen der Kühlmittel Wasser, Luft und Öl im Rahmen der Erfindung möglich, um die geforderte Kühlleistung zu erbringen.

Mit Hilfe einer Wickeleinrichtung 10 wird der abgekühlte Draht D beispielsweise auf eine Spule gewickelt. Die Wickeleinrichtung 10 ist antriebsmäßig außerdem so ausgelegt, daß der Stahldraht D" durch den Drahtspeicher 6, die Richteinrichtung 7, die Heizeinrichtung 8 und die Kühleinrichtung 9 hindurchgezogen werden kann. Vor der wickeleinrichtung 10 ist eine Meßeinrichtung 11 zum Messen der durchlaufenden Drahtlänge angeordnet.

Es versteht sich, daß das beschriebene Verfahren und das dargestellte Ausführungsbeispiel im Rahmen des allgemeinen Erfindungsgedankens verschiedentlich ausgestaltet werden können. Im Rahmen der Erfindung ist es möglich, vor der Reduktionseinrichtung 4 eine zusätzliche Heizeinrichtung anzuordnen, um die notwendige Temperatur im Stahldraht D" gewährleisten zu können. Dies gilt insbesondere für Stahldrähte D'' mit dickeren Durchmessern und/oder höhere Durchlaufgeschwindigkeiten.

Des weiteren ist es im Rahmen der Erfindung möglich, die Heizeinrichtung 8 mit einer elektrischen Widerstandsheizung, einer Plasmaheizung oder einer Konvektivheizung zu betreiben.

## Patentansprüche

1. Verfahren zum Herstellen von Stahldraht hoher Duktilität aus warmgewalztem Walzdraht, **dadurch gekennzeichnet, daß** in einem kontinuierlichen Verfahrensablauf der warmgewalzte Walzdraht (W) zuerst kaltverformt (4), sodann erwärmt (8) und wieder abgekühlt (9) sowie anschließend aufgewickelt (10) wird.

2. Verfahren nach Anspruch 1, **dadurch gekennzeichnet, daß** der Walzdraht (W) und/oder der kaltverformte Stahldraht (D') auf eine Temperatur von 300 bis 500 °C erwärmt wird.

3. Verfahren nach Anspruch 1 oder 2, **dadurch gekennzeichnet, daß** der erwärmte Draht (W; D") auf eine Temperatur von 20 bis 150°C abgekühlt wird.

4. Anlage zum Durchführen des Verfahrens nach einem der Ansprüche 1 bis 3, mit einer Walzdrahtablaufeinrichtung, einer Entzunderungseinrichtung, einer Ziehmittelauftragseinrichtung, einer Querschnitts-Reduktionseinrichtung, einer Zieheinrichtung und einer Drahtwickeleinrichtung, **dadurch gekennzeichnet, daß** der Zieheinrichtung (5) ein Drahtspeicher (6) nachgeschaltet ist, an den eine Einrichtung (8) zum Aufheizen des kaltverformten Stahldrahtes (D') und an diese eine Einrichtung (9) zum Kühlen des erwärmten Stahldrahtes (D") anschließt, wobei der Stahldraht (D'; D"; D) mit Hilfe der Wickeleinrichtung (11) kontinuierlich durch den Drahtspeicher (6) samt Richteinrichtung (7), durch die Heizeinrichtung (8) und die Kühleinrichtung (9) ziehbar ist.

5. Anlage nach Anspruch 4, **dadurch gekennzeichnet, daß** die Heizeinrichtung (8) eine Induktivheizung ist, die aus zumindest einem Teilstück besteht.

6. Anlage nach Anspruch 4, **dadurch gekennzeichnet, daß** die Heizeinrichtung (8) eine elektrische Widerstandsheizung ist.

7. Anlage nach einem der Ansprüche 4 bis 6, **dadurch gekennzeichnet, daß** die Kühleinrichtung (9) aus einer Wasserkühlstrecke und/oder einer Luftkühlstrecke und/oder einer Ölkühlstrecke besteht.

8. Anlage nach einem der Ansprüche 4 bis 7, **dadurch gekennzeichnet, daß** vor der Querschnitts-Reduktionseinrichtung (4) eine zusätzliche Heizeinrichtung angeordnet ist.

9. Anlage nach einem der Ansprüche 4 bis 8, **dadurch gekennzeichnet, daß** die Querschnitts-Reduktionseinrichtung (4) eine Kaltverformungseinrichtung, vorzugsweise eine Kaltwalzeinrichtung ist.

10. Anlage nach einem der Ansprüche 4 bis 8, **dadurch gekennzeichnet, daß** die Querschnitts-Reduktzanseinrichtung. (4) eine Reckeinrichtung ist.

11. Anlage nach einem der Ansprüche 4 bis 10, **dadurch gekennzeichnet, daß** dem Drahtspeicher (6) eine Richteinrichtung (7) nachgeschaltet ist.

12. Anlage nach einem der Ansprüche 4 bis 11, **dadurch gekennzeichnet, daß** vor der Wickeleinrichtung (10) eine Längenmeßeinrichtung (11) vorgesehen ist.
